# EUROPÄISCHE PATENTSCHRIFT

(11) **EP 1 274 615 B1**
(45) Veröffentlichungstag und Bekanntmachung des Hinweises auf die Patenterteilung: **12.11.2003**
(21) Anmeldenummer: 01929546.8
(22) Anmeldetag: 11.04.2001
(51) Int. Cl.: B60T 8/32

(54) **UNTERDRUCKBREMSKRAFTVERSTÄRKER MIT MECHANISCHER NOTBREMSHILFE**
VACUUM BRAKE BOOSTER WITH A MECHANICAL EMERGENCY BRAKE BOOST
SERVO-FREIN A DEPRESSION DOTE D'UN AUXILIAIRE FREIN DE SECOURS MECANIQUE

(30) Priorität: 19.04.2000 DE 10019424
(43) Veröffentlichungstag der Anmeldung: 15.01.2003
(73) Patentinhaber: LUCAS AUTOMOTIVE GMBH, 56070 KOBLENZ (DE)
(72) Erfinder: SCHLÜTER, Peter, 56206 Kammerforst (DE)
(74) Vertreter: Röthinger, Rainer
(86) Internationale Anmeldenummer: EP0104188
(87) Internationale Veröffentlichungsnummer: WO01081140

(56) Entgegenhaltungen:
- WO-A-00/07862
- DE-A- 19 831 962
- PATENT ABSTRACTS OF JAPAN vol. 1997, no. 11, 28. November 1997 (1997-11-28) & JP 09 175373 A (JIDOSHA KIKI CO LTD), 8. Juli 1997 (1997-07-08)

## Beschreibung

Die Erfindung betrifft einen Unterdruckbremskraftverstärker mit einer Unterdruckkammer und einer davon durch eine bewegliche Wand getrennten Arbeitskammer, einem Steuerventil, das ein mit der beweglichen Wand kraftübertragend gekoppeltes Gehäuse aufweist und das zur Erzielung einer Druckdifferenz an der beweglichen Wand die Zufuhr von Atmosphärendruck oder Überdruck zur Arbeitskammer zu steuern vermag, und einer Notbremshilfe mit einem in dem Steuerventilgehäuse angeordneten Permanentmagneten und einem mit dem Permanentmagneten zusammenwirkenden Anker, der bei einer Notbremsung in Anlage mit dem Permanentmagneten gezogen wird, wodurch das Steuerventil für die Zufuhr von Atmosphärendruck oder Überdruck zur Arbeitskammer geöffnet gehalten wird. Der Permanentmagnet und der Anker bilden eine zweikomponentige Magnetbaugruppe, wobei eine erste Komponente der Magnetbaugruppe mit einem Betätigungskolben in Betätigungsrichtung starr gekoppelt ist und eine zweite Komponente der Magnetbaugruppe mittels einer Koppeleinrichtung zumindest in Betätigungsrichtung des Bremskraftverstärkers mit dem Betätigungskolben koppelbar ist. Mit dem Begriff "Betätigungsrichtung" ist im Rahmen der vorliegenden Erfindung immer die Betätigungsrichtung des Bremskraftverstärkers gemeint.

Unterdruckbremskraftverstärker sind seit langem bekannt und befinden sich millionenfach im Einsatz, um die Betätigungskräfte'einer hydraulischen Fahrzeugbremsanlage zu unterstützen und dadurch auf einem für den Fahrer eines Fahrzeuges angenehmen Niveau zu halten. Ebenfalls bekannt sind sogenannte Notbremshilfen, die häufig auch als "Bremsassistenten" bezeichnet werden. Es handelt sich dabei um Einrichtungen, die. einem Fahrer im Fall einer Notbremsung bei im wesentlichen gleicher Betätigungskraft eine erhöhte Bremsleistung zu Verfügung stellen.

Notbremshilfen lassen sich in elektromagnetisch betätigte und mechanisch betätigte Systeme unterscheiden. Aus Kostengründen wird für Anwendungen in preiswerteren Fahrzeugen der Einsatz eines mechanischen Systems angestrebt.

Ein Unterdruckbremskraftverstärker mit einer derartigen mechanischen Notbremshilfe ist beispielsweise aus der WO 00/07862 bekannt. Dieser Unterdruckbremskraftverstärker besitzt eine Unterdruckkammer und eine davon durch eine bewegliche Wand druckdicht getrennte Arbeitskammer. Ein Steuerventil, welches ein mit der beweglichen Wand kraftübertragend gekoppeltes Gehäuse aufweist, umfaßt einen Atmosphären-Ventilsitz, der zur Erzielung einer Druckdifferenz an der beweglichen Wand die Zufuhr von Atmosphärendruck zur Arbeitskammer in Abhängigkeit der Verschiebung eines Eingangsgliedes des Bremskraftverstärkers zu steuern vermag. Das Eingangsglied ist in Betätigungsrichtung mit einem Betätigungskolben gekoppelt.

Zur besseren Bremskraftunterstützung bei Notbremsungen ist in dem Steuerventilgehäuse eine mechanische Notbremshilfe angeordnet. Die Notbremshilfe umfaßt eine zweikomponentige Magnetbaugruppe aus einem Permanentmagneten und einem Anker. Der mit dem Permanentmagneten zusammenwirkende Anker ist über den Betätigungskolben mit dem Eingangsglied in Betätigungsrichtung starr gekoppelt. Eine Kopplungseinrichtung gestattet es, den Anker derart mit dem Permanentmagneten zu koppeln, daß sich zu Beginn eines Bremsvorgangs der axiale Abstand zwischen dem Anker und dem Permanentmagneten nicht ändert.

Der Anker ist federnd entgegen der Betätigungsrichtung des Bremskraftverstärkers vorgespannt und in der Ausgangsstellung des Steuerventils in einem ersten Abstand von dem Permanentmagneten gehalten. Im Zuge einer Annäherung an den Permanentmagneten wird der Anker bei Unterschreitung eines vorab festgelegten, zweiten Abstandes, welcher kleiner als der erste Abstand ist, von dem Permanentmagneten entgegen der auf den Anker wirkenden federnden Vorspannkraft und unter Aufhebung seiner in Betätigungsrichtung starren Kopplung mit dem Eingangsglied in Anlage an den Permanentmagneten gezogen.

Die Bewegung des Ankers wird auf eine mit dem Anker starr gekoppelte Ventilhülse übertragen, an deren dem Eingangsglied zugewandten Ende der Atmosphären-Ventilsitz angeordnet ist. Bei aktivierter Notbremshilfe wird aufgrund der Kopplung von Anker und Permanentmagnet das Atmosphären-Ventil maximal geöffnet gehalten. Es baut sich daher die maximal mögliche Druckdifferenz auf, wodurch die maximal mögliche Verstärkungskraft des Bremskraftverstärkers erreicht wird.

Nach der Aktivierung der Notbremshilfe muß zu deren Deaktivierung die durch den Fahrer aufgebrachte Betätigungskraft reduziert werden. Infolge der Reduzierung der vom Fahrer aufgebrachten Betätigungskraft bewegt sich der Betätigungskolben entgegen der Betätigungsrichtung und ein mit dem Betätigungskolben starr gekoppelter Mitnehmer löst den Anker vom Permanentmagneten.

Solange der Aussteuerdruck des Bremskraftverstärkers, das heißt die maximale Druckdifferenz an der beweglichen Wand, nicht erreicht wird, ist für das Unterschreiten des zweiten Abstandes und die damit einhergehende Kopplung von Anker und Permanentmagnet ein definierter Betätigungsgeschwindigkeits-Überschuß erforderlich. Ist allerdings der Aussteuerdruck erreicht, so ist eine weitere Erhöhung der vom Fahrer aufgebrachten Betätigungskraft unabhängig von der Betätigungsgeschwindigkeit immer mit einer Annäherung von Anker und Permanentmagnet verbunden. Es kann also auch bei einer langsamen Erhöhung der Betätigungskraft, beispielsweise bei Fahrzeugstillstand vor einer Ampelanlage, nach Erreichen des Aussteuerdruckes zu einer ungewollten Kopplung von Anker und Permanentmagnet kommen. Die Notbremshilfe wird aktiviert, obwohl keine Notbremssituation vorliegt.

Um die ungewollt aktivierte Notbremshilfe wieder zu deaktivieren, muß der Fahrer - genau wie im Fall der gewollten Aktivierung nach einer Notbremsung - das Bremspedal relativ weit zurücknehmen, bevor der Bremskraftverstärker auf seine ursprüngliche Leistungskennlinie zurückfällt und vom Fahrer wieder in gewohnter Weise dosiert werden kann.

Die mit einer Aktivierung der Notbremshilfe in Nicht-Notbremssituationen einhergehende Abweichung von der gewohnten Leistungskennlinie ist für den Fahrer ungewohnt und wird daher als nachteilig empfunden.

Der Erfindung liegt die Aufgabe zugrunde, einen Bremskraftverstärker mit mechanischer Notbremshilfe anzugeben, bei welchem nur in Notbremssituationen eine Aktivierung der Notbremshilfe erfolgen kann.

Ausgehend von einem Bremskraftverstärker der eingangs beschriebenen Art ist diese Aufgabe erfindungsgemäß dadurch gelöst, daß eine Koppeleinrichtung vorgesehen ist, die die zweite, noch ungekoppelte Komponente der Magnetbaugruppe zumindest in Betätigungsrichtung des Bremskraftverstärkers mit dem Betätigungskolben koppelt, wenn entgegen der Betätigungsrichtung des Bremskraftverstärkers erhöhte Rückwirkkräfte in die Koppeleinrichtung eingeleitet werden.

Sofern keine Notbremssituation vorliegt, also beispielsweise bei einer langsamen Erhöhung der Betätigungskraft, werden durch die Koppeleinrichtung sowohl der Anker als auch der Permanentmagnet zumindest in Betätigungsrichtung mit dem Betätigungskolben gekoppelt. Durch das gleichzeitige Koppeln von sowohl Anker als auch Permanentmagnet mit dem Betätigungskolben kann sich der gegenseitige Abstand der beiden Komponenten der Magnetbaugruppe nicht weiter verringern. Es ist daher ausgeschlossen, daß sich Anker und Permanentmagnet einander soweit nähern, daß der oben erwähnte zweite Abstand unterschritten wird und eine Kopplung von Anker und Permanentmagnet stattfindet.

Erfindungsgemäß werden die entgegen der Betätigungsrichtung auf den Betätigungskolben wirkenden hydraulischen Rückwirkkräfte des Hauptbremszylinders als Kriterium für das Vorliegen einer Notbremssituation herangezogen. Bei einer vergleichsweise langsamen Erhöhung der vom Fahrer aufgebrachten Betätigungskraft, wenn also keine Notbremssituation vorliegt, sind die Rückwirkkräfte des Hauptbremszylinders relativ hoch. In diesem Fall wird sozusagen als Antwort auf die hohen Rückwirkkräfte von diesen die Koppeleinrichtung aktiviert und die noch nicht mit dem Betätigungskolben gekoppelte Komponente der Magnetbaugruppe wird mit dem Betätigungskolben zumindest in Betätigungsrichtung gekoppelt. Eine ungewollte Aktivierung der Notbremshilfe ist dann ausgeschlossen.

Bei einer für Notbremssituationen typischen schnellen Betätigung der Bremsanlage hingegen sind die Rückwirkkräfte des Hauptbremszylinders zu Beginn noch vergleichsweise gering. Die Koppeleinrichtung bleibt folglich deaktiviert und die Notbremshilfe kann sich in gewohnter Weise zuschalten.

Gemäß einer bevorzugten Ausführungsform ist eine mechanische Koppeleinrichtung vorgesehen. Vorteilhafterweise wirken die Rückwirkkräfte des Hauptbremszylinders entgegen Betätigungsrichtung auf die mechanische Koppeleinrichtung, so daß die zweite noch ungekoppelte Komponente der Magnetbaugruppe zumindest in Betätigungsrichtumg mit dem Betätigungskolben koppelt, z.B. wenn die Rückwirkkräfte eine bestimmte Schwelle überschreiten. Die Koppeleinrichtung ist in diesem Fall vorzugsweise Kraft übertragend zwischen dem Betätigungskolben und einer die Rückwirkkräfte des Hauptbremszylinders in den Bremskraftverstärker einleitenden Komponente des Bremskraftverstärkers angeordnet. Gemäß dem Grundsatz "actio = reactio" wirkt auf die Koppeleinrichtung dann zusätzlich zu der in Betätigungsrichtung wirkenden, vom Fahrer aufgebrachten Betätigungskraft noch die entgegen der Betätigungsrichtung wirkende Rückwirkkraft des Hauptbremszylinders.

Bevorzugt erfolgt die Koppelung der noch nicht mit dem Betätigungskolben gekoppelten Komponente der Magnetbaugruppe mit dem Betätigungskolben mittels einer Klemmverbindung. Andere Ausgestaltungen der Koppeleinrichtungen sind jedoch ebenfalls möglich. So kann die Koppeleinrichtung beispielsweise Rast- oder Schnappelemente zur Kopplung der noch ungekoppelten Komponente der Magnetbaugruppe mit dem Betätigungskolben umfassen.

Sofern eine Klemmverbindung zur Kopplung der noch ungekoppelten Komponente der Magnetbaugruppe mit dem Betätigungskolben vorgesehen ist, kann die Koppeleinrichtung ein Klemmelement umfassen, welches durch eine z.B. in Betätigungsrichtung wirkende Kraft radial nach außen bezüglich einer Längsachse des Steuerventilgehäuses verformbar ist. Das Klemmelement ist vorzugsweise in Betätigungsrichtung hinter dem Betätigungskolben angeordnet und Kraft übertragend mit diesem verbunden. Zumindest ein Teil der zur Verformung des Klemmelementes benötigten Kraft kann daher vom Betätigungskolben aufgebracht werden.

Gemäß einer bevorzugten Ausführungsform sind die verformbaren Bereiche des Klemmelementes als Finger ausgestaltet, welche sich parallel zur Längsachse des Steuerventilgehäuses erstrecken und in ihrer Gesamtheit diese Längsachse konzentrisch umgeben. Die Finger wiederum können an ihren der Unterdruckkammer zugewandten Enden mit einem gemeinsamen Trägerteil verbunden sein, welches dem Betätigungskolben nachgeschaltet ist.

Zur Verformung des Klemmelementes kann ein z.B. zwischen dem Betätigungskolben und dem Klemmelement angeordnetes, mit Schrägflächen versehenes Bauteil eingesetzt werden. Anstelle eines separaten, mit Schrägflächen versehenen Bauteils können die Schrägflächen auch radial außen auf dem Betätigungskolben vorgesehen werden.

Durch das Zusammenwirken der Schrägflächen (z.B. Konusflächen) mit den verformbaren, beispielsweise als Finger ausgestalteten Bereichen des Klemmelementes wird die Koppeleinrichtung betätigt. Hierzu ist in der Regel eine Verringerung des axialen Abstandes zwischen der mit Schrägflächen versehenen Komponente und dem Klemmelement notwendig. Die Schrägflächen können bezüglich einer Längsachse des Steuerventilgehäuses geneigt sein.

Vorzugsweise ist zwischen dem Klemmelement und dem mit Schrägflächen versehenen Bauteil ein elastisches Element derart angeordnet, daß es einer Annäherung beider Komponenten entgegenwirkt. Das Steuerventilgehäuse kann eine Stufe aufweisen, welche entgegen der Betätigungsrichtung als Anschlag für das mit Schrägflächen versehene Bauteil fungiert. In Betätigungsrichtung hinter dem Klemmelement ist vorzugsweise eine Fühlscheibe angeordnet, welche mit einer Reaktionsscheibe zusammenwirkt, die zwischen einem Reaktionskolben des Unterdruckbremskraftverstärkers und dem Steuerventilgehäuse angeordnet ist.

Die Klemmvorrichtung kann weiterhin einen mit der noch ungekoppelten Komponente der Magnetbaugruppe in Betätigungsrichtung gekoppelten Fortsatz aufweisen, welcher mit dem Klemmelement zusammenwirkt und das Klemmelement zumindest bereichsweise radial außen konzentrisch umgibt. Im Falle einer Verformung des Klemmelementes radial nach außen gelangen die sich verformenden Bereiche des Klemmelementes in Anlage mit dem Abschnitt des Fortsatzes, welcher das Klemmelement radial außen umgibt. Durch das in Anlage Kommen des Klemmelementes mit dem Fortsatz der noch ungekoppelten Komponente der Magnetbaugruppe erfolgt die Kopplung dieser Komponente mit dem Betätigungskolben. Der Fortsatz ist vorzugsweise bezüglich der zu koppelnden Komponente der Magnetbaugruppe in Betätigungsrichtung vorgespannt, um eine gewisse Relativbewegung zwischen dieser Komponente und dem Fortsatz zu gestatten.

Die noch ungekoppelte Komponente der Magnetbaugruppe ist vorzugsweise über z.B. eine Schraubverbindung axial verstellbar mit einer Halterung verbunden. Die Halterung wiederum kann mittels eines elastischen Elementes entgegen der Betätigungsrichtung gegen eine stufe des Steuerventilgehäuses vorgespannt sein. Durch die Stufe des Steuerventilgehäuses wird eine Bewegung der koppelbaren Komponente der Magnetbaugruppe entgegen der Betätigungsrichtung verhindert. Das elastische Element hingegen gestattet eine gewisse Verschiebung der koppelbaren Komponente der Magnetbaugruppe in Betätigungsrichtung.

Die Halterung für die ungekoppelte Komponente der Magnetbaugruppe ist vorzugsweise entgegen der Betätigungsrichtung starr und in Betätigungsrichtung federnd mit dem Fortsatz, welcher mit dem Klemmelement zusammenwirkt, verbunden. Zu diesem Zweck kann beispielsweise die Halterung radial innen mit einer Nut versehen sein. Der Fortsatz kann einen in die Nut ragenden Kragen aufweisen, wobei vorteilhafterweise ein zwischen einer der Unterdruckkammer zugewandten Seitenfläche der Nut und einer gegenüberliegenden Stirnseite des Kragens angeordnetes elastisches Element die Halterung und den Fortsatz gegeneinander vorspannt.

Bevorzugte Ausführungsbeispiele der Erfindung werden mit weiteren Einzelheiten und Vorteilen anhand der beigefügten, schematischen Figuren näher erläutert. Es zeigen:
- Fig. 1: einen Längsschnitt durch das Steuerventil eines ersten Ausführungsbeispiels eines erfindungsgemäßen Unterdruckbremskraftverstärkers in einer Bereitschaftstellung;
- Fig. 2.: das Steuerventil von Fig. 1 bei aktivierter Notbremshilfe;
- Fig. 3: das Steuerventil von Fig. 1 in Lösestellung nach Deaktivierung der Notbremshilfe;
- Fig. 4: das Steuerventil von Fig. 1 bei Erreichen des Aussteuerdrucks in einer Normalbremsstellung;
- Fig. 5: das Steuerventil von Fig. 1 nach Überschreiten des Aussteuerpunktes bei aktivierter Koppeleinrichtung;
- Fig. 6: das Steuerventil gemäß Fig. 1 in einer Teilbremsstellung bei aktivierter Koppeleinrichtung;
- Fig. 7: einen Längsschnitt durch das Steuerventil eines zweiten Ausführungsbeispiels eines erfindungsgemäßen Unterdruckbremskraftverstärkers.

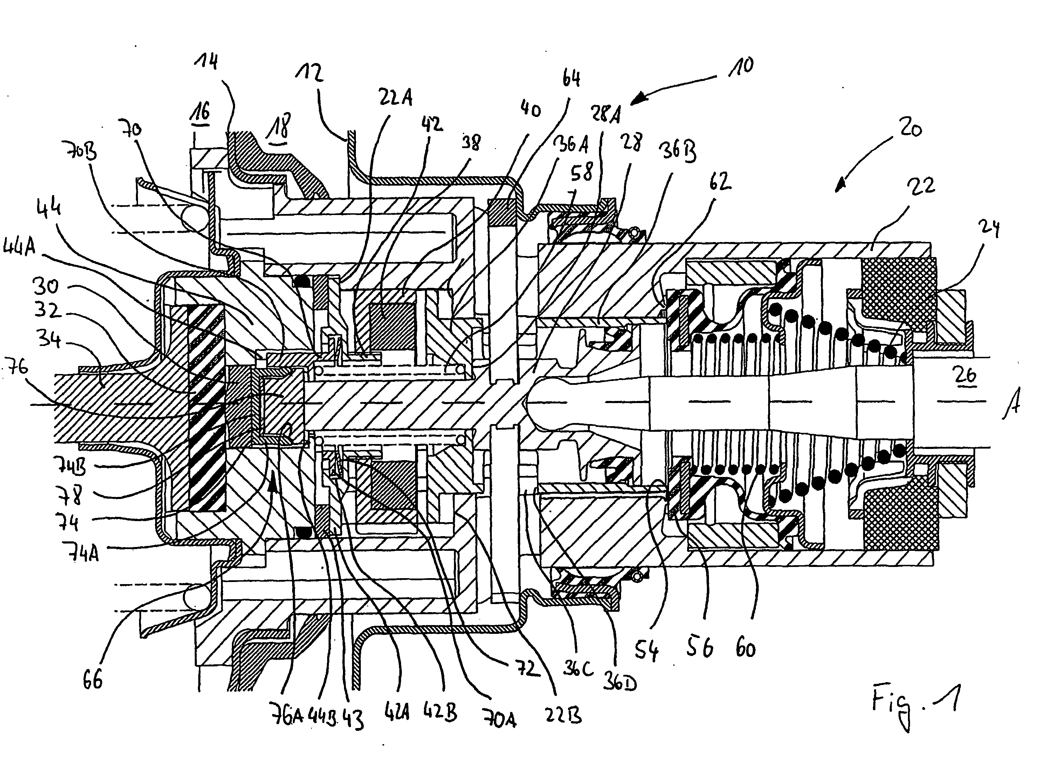

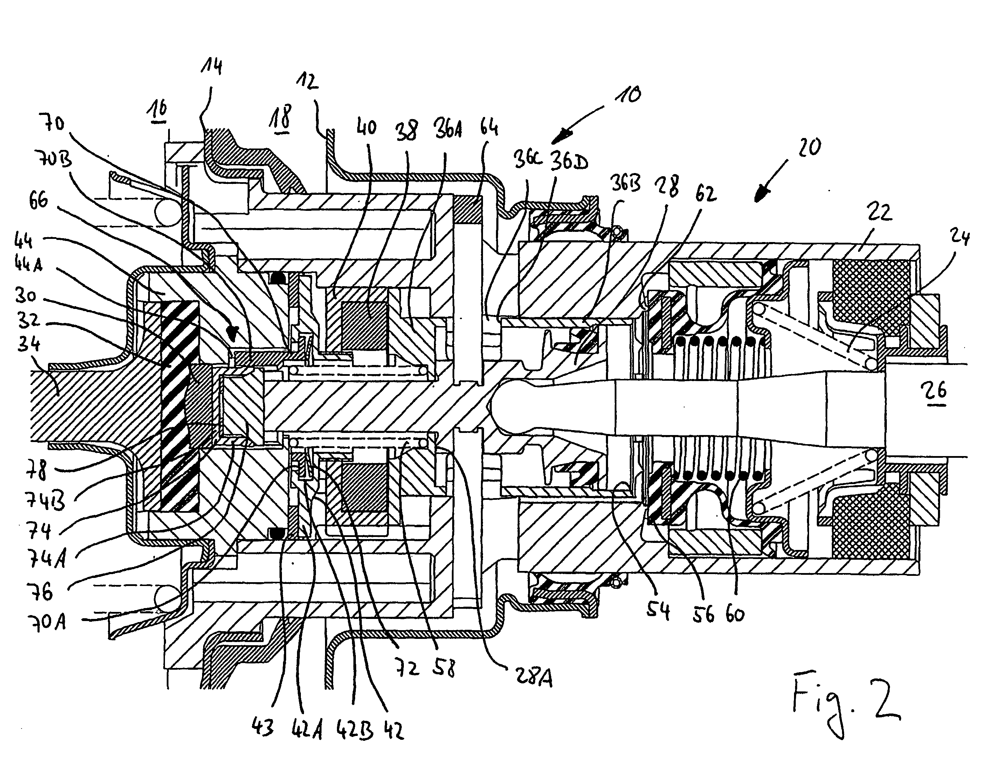

In Fig. 1 ist ein erstes Ausführungsbeispiel eines erfindungsgemäßen Unterdruckbremskraftverstärker 10 mit einem Gehäuse 12 gezeigt, in dem eine bewegliche Wand 14 eine Unterdruckkammer 16 druckdicht von einer Arbeitskammer 18 trennt.

Die Unterdruckkammer 16 steht im Betrieb des Bremskraftverstärkers 10 ständig mit einer Unterdruckquelle in Verbindung, beispielsweise mit dem Ansaugtrakt eines Verbrennungsmotors oder mit einer Unterdruckpumpe. Ein Steuerventil 20 mit einem Gehäuse 22 kann wahlweise die Arbeitskammer 18 mit der Unterdruckkammer 16 verbinden, um die Arbeitskammer 18 zu evakuieren, oder die evakuierte Arbeitskammer 18 mit der Umgebungsatmosphäre, d.h. dem Umgebungsdruck, verbinden, um eine Druckdifferenz an der beweglichen Wand 14 zu erzeugen. Die bewegliche Wand 14 ist kraftübertragend mit dem Steüerventilgehäuse 22 gekoppelt.

Der Bremskraftverstärker 10 wird mittels eines stangenförmigen, von einer Feder 24 in seine Ausgangsstellung vorgespannten Eingangsgliedes 26 betätigt, das längs einer Achse A in das Steuerventilgehäuse 22 ragt und mit seinem einen, kugelig ausgeführten Ende in einem Betätigungskolben 28 befestigt ist.

Das dem kugelig ausgeführten Ende des Eingangsgliedes 26 gegenüberliegende Ende des Betätigungskolbens 28 steht über eine Koppeleinrichtung 66 in Kontakt mit einer Fühlscheibe 30, die eine über das Eingangsglied 26 in den Bremskraftverstärker 10 eingeleitete Betätigungskraft über eine Reaktionsscheibe 32 aus Elastomermaterial auf einen Reaktionskolben 34 eines dem Bremskraftverstärker 10 funktionell nachgeschalteten, hier nicht gezeigten Hauptzylinders einer hydraulischen Fahrzeugbremsanlage überträgt. Die Reaktionsscheibe 34 führt die vom Fahrer aufgebrachte Betätigungskraft sowie die Verstärkerkraft zusammen.

Der Betätigungskolben 28 durchsetzt einen konzentrisch zu ihm angeordneten, kreisringförmigen Anker 36A und einen ebenfalls konzentrisch zum Betätigungskolben 28 angeordneten, ringförmigen Permanentmagneten 38, der in einem topfförmigen Bauteil 40 aufgenommen ist.

Das den Permanentmagneten 38 aufnehmende topfförmige Bauteil 40 ist über ein zentrales Innengewinde axial einstellbar mit einer Halterung in Gestalt eines hohlzylindrischen Halteringes 42 verbunden, welcher ein komplementäres Außengewinde besitzt. Der Haltering 42 besitzt eine flanschförmige Durchmessererweiterung 42A, welche mit einem Teil ihrer dem Eingangsglied 26 zugewandten Oberfläche an einer Stufe 22A des Steuerventilgehäuses 22 anliegt.

Das Steuerventilgehäuse 22 wird auf einer dem Eingangsglied 26 gegenüberliegenden Seite durch einen Steuerventilgehäuse-Einsatz 44 abgeschlossen. Zwischen einer der Unterdruckkammer 16 zugewandten Oberfläche der flanschförmigen Durchmessererweiterung 42A des Halteringes 42 und einer dem Eingangsglied 26 zugewandten Stirnfläche des Steuerventilgehäuse-Einsatzes 44 ist ein ringförmiges elastisches Element 43 angeordnet. Das elastische Element 43, welches aus einem Elastomermaterial besteht, gestattet eine definierte Verschiebung des Halteringes 42 bzw. des mit dem Haltering 42 gekoppelten und den Permanentmagneten 38 aufnehmenden topfförmigen Bauteiles 40 in Betätigungsrichtung.

Der Innendurchmesser des Halterings 42 weist an seinem der Unterdruckkammer 16 zugewandten Ende eine Ringnut 42B auf. In diese Ringnut 42B ragt ein Kragen 70A eines sich vom Haltering 42 in Richtung auf die Unterdruckkammer 16 erstreckenden Fortsatzes 70. Zwischen einer der Unterdruckkammer 16 zugewandten Seitenfläche der Nut 42B und einer dem Eingangsglied 26 zugewandten Stirnfläche des Kragens 70A des Fortsatzes 70 ist ein Federelement 72 derart angeordnet, daß der Kragen 70A in Betätigungsrichtung vorgespannt ist. Der Fortsatz 70 ist daher in Betätigungsrichtung starr und entgegen der Betätigungsrichtung federnd mit der Halterung 42 verbunden.

Der Fortsatz 70 weist eine Reihe von Abschnitten 70B in Gestalt von Zylindermantelsegmenten auf, welche sich in eine zentrale Aussparung 44A des Steuerventilgehäuse-Einsatzes 44 erstrecken. In Fig. 1 ist nur ein einziger Abschnitt 70B dargestellt. Diese Abschnitte 70B des Fortsatzes 70 wirken mit Fingern 74A eines Klemmelementes 74 zusammen. In Fig. 1 sind zwei derartige Finger 74A dargestellt, welche sich parallel zur Gehäuselängsachse A erstrecken und diese konzentrisch umgeben. Die Finger 74A sind an ihren der Unterdruckkammer 16 zugewandten Enden mit einem gemeinsamen Trägerteil 74B verbunden. Das Klemmelement 74 weist daher eine im wesentlichen topfförmige Gestalt auf, wobei jedoch die Seitenwände des Topfes im Bereich zwischen den einzelnen Fingern 74A Aussparungen aufweisen.

In Betätigungsrichtung hinter dem Klemmelement 74 ist die Fühlscheibe 30 angeordnet. In Betätigungsrichtung vor dem Klemmelement 74 befindet sich ein konisches Bauteil 76, welches in Betätigungsrichtung über seinen konischen Abschnitt 76B mit den Fingern 74A und über seine der Unterdruckkammer 16 zugewandten Stirnfläche über ein elastisches Element 78 mit dem Trägerteil 74B zusammenwirkt.

Dringt das konische Bauteil 76 in das Innere des topfförmigen Klemmelementes 74 ein, so werden die Finger 74A des Klemmelementes 74 vom konischen Abschnitt 76B des konischen Bauteiles 76, dessen Querschnitt in Betätigungsrichtung abnimmt, radial nach außen gebogen. Gleichzeitig wird das dem konischen Bauteil 76 in Betätigungsrichtung vorgelagerte elastische Element 78 entsprechend verformt.

Der mit dem Permanentmagneten 38 zusammenwirkende Anker 36A ist einstückig mit einer axial verschieblichen und im Steuerventilgehäuse geführten Ventilhülse 36B ausgestaltet. Der Anker 36A weist einen radial nach innen weisenden Kragen, welcher mit einer Rückstellfeder 58 zusammenwirkt, auf. Die unter Vorspannung stehende Rückstellfeder 58 wirkt mit dem fest mit dem Steuerventilgehäuse 22 verbundenen Steuerventilgehäuse-Einsatz 44 zusammen und spannt den Anker 36A und die Ventilhülse 36B entgegen der Betätigungsrichtung des Eingangsgliedes 26 gegen einen Absatz 28A des Betätigungskolbens 28 vor. Der Anker 36A ist folglich in Betätigungsrichtung starr mit dem Betätigungskolben 28 gekoppelt.

Am freien Ende der Ventilhülse 36B ist ein erster, ringförmiger Ventilsitz 54 des Steuerventils 20 ausgebildet. Der erste Ventilsitz 54 wirkt mit einem über eine Feder 60 gegen ihn vorgespannten, ebenfalls ringförmigen Ventildichtglied 56 zusammen und kann die Verbindung zwischen der Umgebungsatmosphäre und der Arbeitskammer 18 des Bremskraftverstärkers 10 steuern. Radial außerhalb des ersten Ventilsitzes 54 und konzentrisch zu diesem ist innen am Steuerventilgehäuse 22 ein zweiter ringförmiger Ventilsitz 62 des Steuerventils 20 ausgebildet, der ebenfalls mit dem Ventildichtglied 56 zusammenwirkt und der die Verbindung zwischen der Unterdruckkammer 16 und der Arbeitskammer 18 des Bremskraftverstärkers 10 steuern kann.

Der erste Ventilsitz 54 des Steuerventils 20 wird bei einer Betätigung des Bremskraftverstärkers in Abhängigkeit der Verschiebung des Eingangsgliedes 26 relativ zum Steuerventilgehäuse 22 mehr oder weniger weit geöffnet, wodurch sich eine entsprechende Unterstützungskraft des Bremskraftverstärkers 10 ergibt, die aus der aktuell an der beweglichen Wand 14 wirkenden Druckdifferenz resultiert.

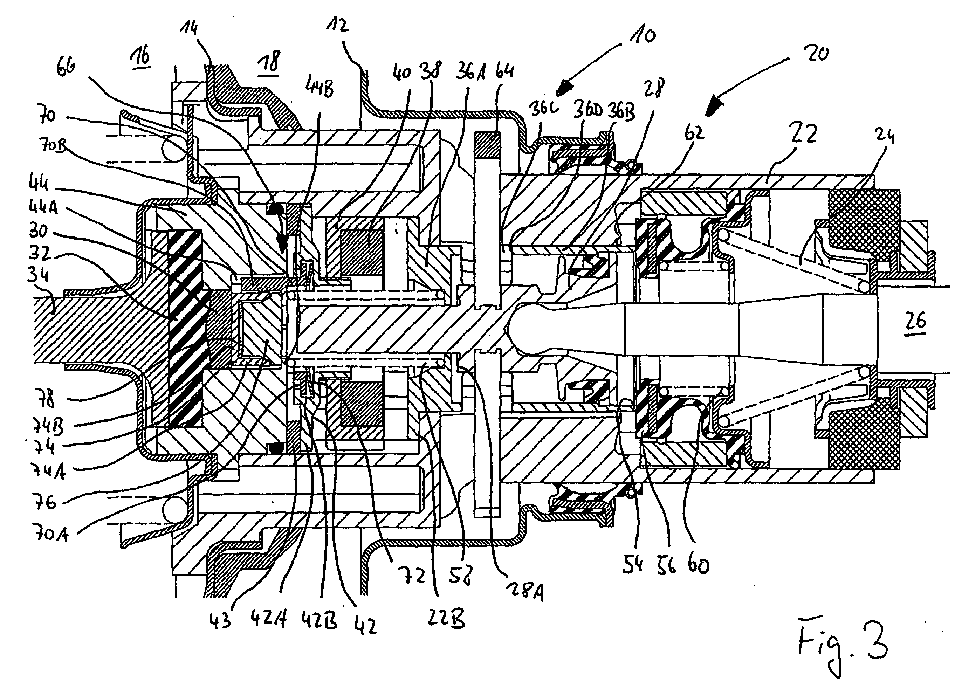

Bei einer schnell und mit relativ großem Hub erfolgenden Betätigung des Eingangsgliedes 26, wie sie typisch für eine Notbremsung ist, nähert sich der Anker 36A dem Permanentmagneten 38 soweit an, daß die Kraft der Druckfeder 58 nicht mehr dazu ausreicht, den Anker 36A vom Permanentmagneten 38 fernzuhalten. Es überwiegt dann die vom Permanentmagneten 38 auf den Anker 36A ausgeübte Kraft. Letzterer entkoppelt dann vom Eingangsglied 26 und gerät in Anlage mit dem Permanentmagneten 38. Von dieser Bewegung des Ankers 36A wird auch die einstückig mit dem Anker 36A ausgebildete Ventilhülse 36B erfaßt, so daß der Ventilsitz 54 durch die Kopplung von Anker 36A und Permanentmagnet 38 maximal geöffnet gehalten wird. Damit ist die Notbremshilfe aktiviert und es wird die maximal mögliche Verstärkerkraft des Bremskraftverstärkers 10 zur Verfügung gestellt. Diese Betriebsstellung des Bremskraftverstärkers 10 mit aktivierter Notbremshilfe ist in Fig. 2 dargestellt.

Da im Falle einer Notbremsung die Rückwirkkräfte des Hauptbremszylinders zu Beginn der Bremsung noch relativ gering sind, wird die mittels des Betätigungskolbens 28 in das konische Bauteil 76 eingeleitete, vom Fahrer aufgebrachte Betätigungskraft ohne großen Widerstand über das elastische Element 78 an das Klemmelement 74 und vom Klemmelement 74 an die Fühlscheibe 30 übertragen. Die Rückwirkkräfte reichen folglich nicht aus, um den vom Fahrer aufgebrachten Betätigungskräften einen Widerstand entgegenzusetzen, welcher zu einer Verformung des Klemmelementes 74 und zu einer Kopplung des Permanentmagneten 38 in Betätigungsrichtung mit dem Betätigungskolben 28 führen würde. Die Koppeleinrichtung bleibt deaktiviert.

Um aus der in Fig. 2 dargestellten Funktionsstellung des Bremskraftverstärkers 10 die Bremse zu lösen und die Notbremshilfe zu deaktivieren, muß die vom Fahrer aufgebrachte Betätigungskraft reduziert werden. Bei einer Reduzierung der vom Fahrer aufgebrachten Betätigungskraft wird der Rückhub des Eingangsgliedes 26 durch die Rückstellfedern 24 und 58 unterstützt. Aufgrund des Rückhubes des Eingangsgliedes 26 gelangt ein mit dem Betätigungskolben 28 starr gekoppelter und sich durch eine Ausnehmung 36C der Ventilhülse 36B erstreckender Riegel 64 in Kontakt mit einer Stirnseite 36D der Ventilhülse 36B. Bei einer weiteren Zunahme des Rückhubes werden folglich die Rückstellkräfte der Rückstellfedern 24 und 58 über den Riegel 64 auf die Ventilhülse 36B und den mit der Ventilhülse 36B starr gekoppelten Anker 36A übertragen, so daß der Anker 36A schließlich vom Permanentmagneten 38 abreißt. Die Notbremshilfe ist deaktiviert.

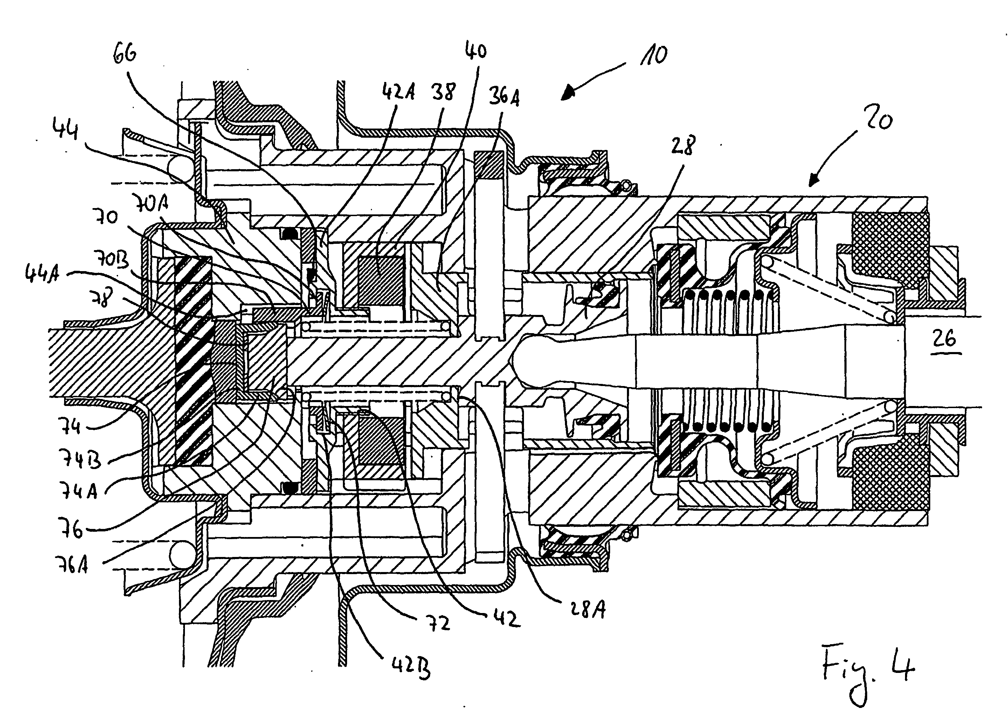

Diese Betriebsstellung des Bremskraftverstärkers mit gelöster Bremse bei vollem Rückhub des Eingangsgliedes 26 ist in Fig. 3 dargestellt.

Die mit dem Anker 36A starr gekoppelte Ventilhülse 36B wird durch den Rückhub des Betätigungskolbens 28 von der Rückstellfeder 58 entgegen der Betätigungsrichtung verschoben und gegen eine Stufe 22B des Steuerventilgehäuses 22 vorgespannt. Der erste Ventilsitz 54 kommt daraufhin mit dem Ventildichtglied 56 in Berührung und verschiebt dieses ebenfalls entgegen der Betätigungsrichtung. Dadurch wird der zweite Ventilsitz 62 geöffnet und eine Verbindung zwischen der Arbeitskammer 18 und der Unterdruckkammer 16 hergestellt. Die Arbeitskammer 18 wird evakuiert und es stellt sich der in Fig. 1 gezeigte Ausgangszustand ein.

In der in Fig. 3 dargestellten Betriebsstellung des Bremskraftverstärkers 10 hat sich das konische Bauteil 76 bereits vom Betätigungskolben 28 getrennt, da eine weitere Verschiebung des konischen Bauteiles 76 entgegen der Betätigungsrichtung durch einen Anschlag 44B des Steuerventilgehäuse-Einsatzes 44 verhindert wird.

Wird aus der in Fig. 1 dargestellten Bereitschaftsstellung des Bremskraftverstärkers 10 die vom Fahrer aufgebrachte Betätigungskraft langsam erhöht, liegt also keine Notbremssituation vor, so wirken der Betätigung zunehmend höhere Rückwirkkräfte des Hauptbremszylinders entgegen, welche schließlich zu einer Aktivierung der Koppeleinrichtung führen.

In Fig. 4 ist der Bremskraftverstärker 10 von Fig. 1 bei Erreichen des Aussteuerdruckes in einer Normalbremsstellung mit aktivierter Koppeleinrichtung dargestellt. Der Anker 36A hat sich dem Permanentmagneten 38 bereits soweit genähert, daß eine weitere Verschiebung des Ankers 36A in Betätigungsrichtung zu einer unerwünschten Koppelung von Anker 36A und Permanentmagnet 38 führen würde. In einer solchen Betriebsstellung des Bremskraftverstärkers 10 aktiviert sich die Koppeleinrichtung.

Aufgrund der in diesem Zustand hohen Rückwirkkräfte des Hauptbremszylinders wird bei einer weiteren Verschiebung des Betätigungskolbens 28 in Betätigungsrichtung das zwischen dem Klemmelement 74 und dem konischen Bauteil 76 angeordnete elastische Element 72 verformt. Das konische Bauteil 76 dringt daraufhin noch weiter in das Klemmelement 74 ein, so daß die Finger 74A des Klemmelementes 74 von dem konischen Abschnitt 76A des konischen Bauteiles 76 radial nach außen gebogen werden. Die Finger 74A verklemmen sich daraufhin mit den Innendurchmessern der sich in die Aussparung 44A des Steuerventilgehäuse-Einsatzes 44 erstreckenden Abschnitte 70B des Fortsatzes 70. Folglich wird der Permanentmagnet 38 über das topfförmige Bauteil 40, die Halterung 42, den Fortsatz 70, das Klemmelement 74 und das konische Bauteil 76 in Betätigungsrichtung starr mit dem Betätigungskolben 28 gekoppelt. Da auch der Anker 36A über einen Anschlag 28A des Betätigungskolbens 28 starr mit diesem gekoppelt ist, kann sich der Abstand zwischen dem Anker 36A und dem Permanentmagneten 38 nicht weiter verringern.

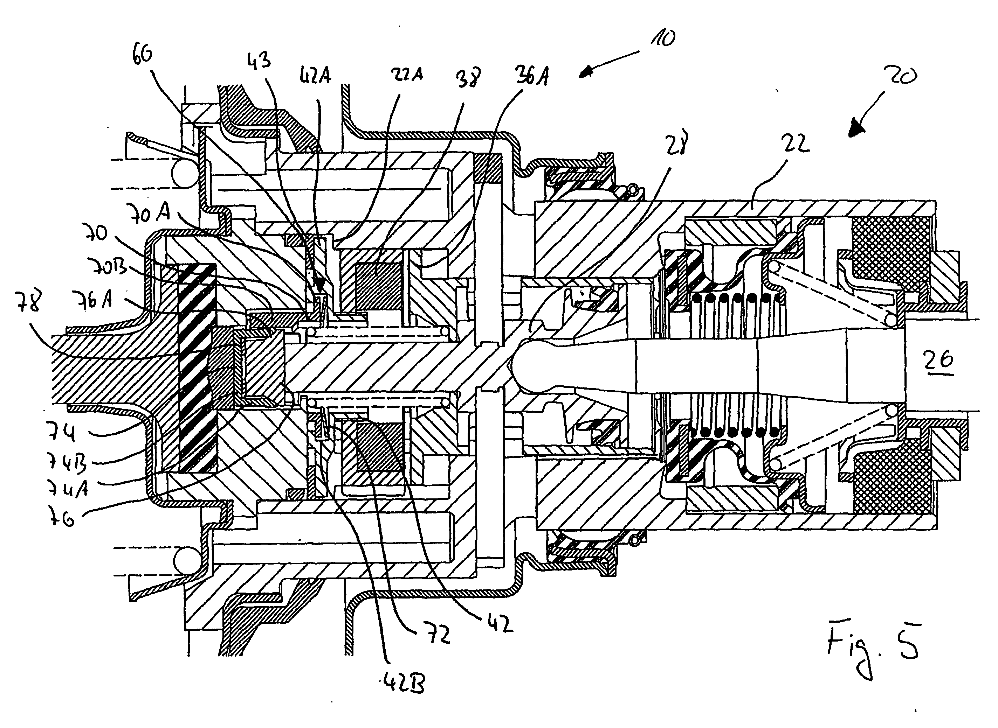

Wird nun, wie in Fig. 5 dargestellt, die vom Fahrer aufgebrachte Betätigungskraft weiter erhöht und der Aussteuerdruck überschritten, so bewegt sich zwar der Betätigungskolben 28 weiterhin in Betätigungsrichtung, der Abstand zwischen Anker 36A und Permanentmagnet 38 kann sich jedoch aufgrund der starren Kopplung auch des Permanentmagneten 38 mit dem Betätigungskolben 28 nicht weiter verringern. Statt dessen löst sich die flanschförmige Durchmessererweiterung 42A der Halterung 42 von ihrer Anlage mit dem Anschlag 22A des Steuerventilgehäuses 22 und das elastische Element 43 wird verformt. Eine ungewollte Aktivierung der Notbremshilfe ist ausgeschlossen.

Wird aus der in Fig. 5 dargestellten Funktionsstellung durch Reduzierung der vom Fahrer aufgebrachten Betätigungskraft die Bremse gelöst, so drückt das nun entlastete elastische Element 78 das konische Bauteil 76 und das Klemmelement 74 auseinander. Die Klemmwirkung zwischen Klemmelement 74 und Fortsatz 70 wird aufgehoben und der Permanentmagnet 38 wieder vom Betätigungskolben 28 entkoppelt.

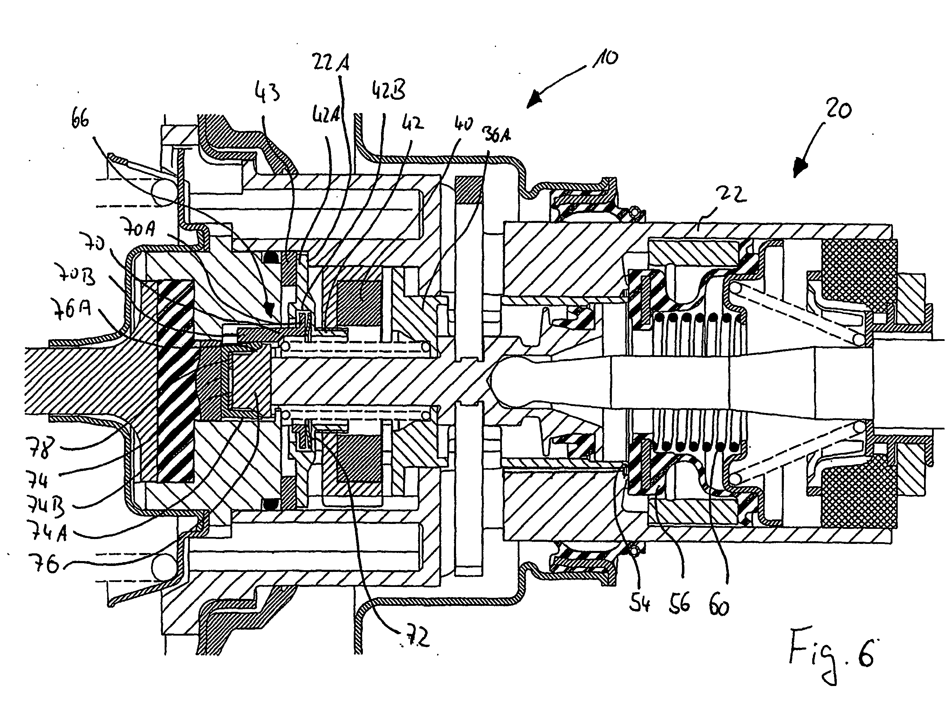

In der in Fig. 6 dargestellten, sogenannten Teilbremsstellung des Bremskraftverstärkers 10 wird der geöffnete Ventilsitz 54 bei gleichbleibender, vom Fahrer aufgebrachter Betätigungskraft durch die Rückwirkkräfte des Hauptbremszylinders geschlossen. Es stellt sich die Gleichgewichtsstellung ein.

Wurde in der Teilbremsstellung die Koppeleinrichtung bereits aktiviert, klemmen die Finger 74A also bereits den Abschnitt 70B des Fortsatzes 70, so würden die zum Schließen des Ventilsitzes 54 erforderlichen Rückwirkkräfte des Hauptbremszylinders bei einer einstückigen Ausführung von Fortsatz 70 und Halterung 42 über die flanschförmige Durchmessererweiterung 42A der Halterung 42 vollständig in das Steuerventilgehäuses 22 eingeleitet. In diesem Fall könnte der Ventilsitz 54 durch die Rückwirkkräfte des Hauptbremszylinders nicht geschlossen werden und eine Gleichgewichtsstellung wäre nicht erreichbar.

Um das Erreichen der Gleichgewichtsstellung in der Teilbremsstellung trotzdem zu ermöglichen, sind Halterung 42 und Fortsatz 70 als getrennte und gegeneinander verschiebliche Bauteile ausgestaltet. Wie oben bereits ausgeführt, kann der Fortsatz 70 relativ zur Halterung 42 durch Verformung des in der Nut 42B der Halterung 42 angeordneten elastischen Elementes 43 entgegen der Betätigungsrichtung verschoben werden. Die Rückwirkkräfte des Hauptbremszylinders können somit zumindest teilweise auch bei aktivierter Koppeleinrichtung auf den Betätigungskolben 28 zurückwirken. Über die Feder 58 werden die Rückwirkkräfte dann vom Betätigungskolben 28 auf die Ventilhülse 36B übertragen, so daß der Ventilsitz 54 geschlossen wird.

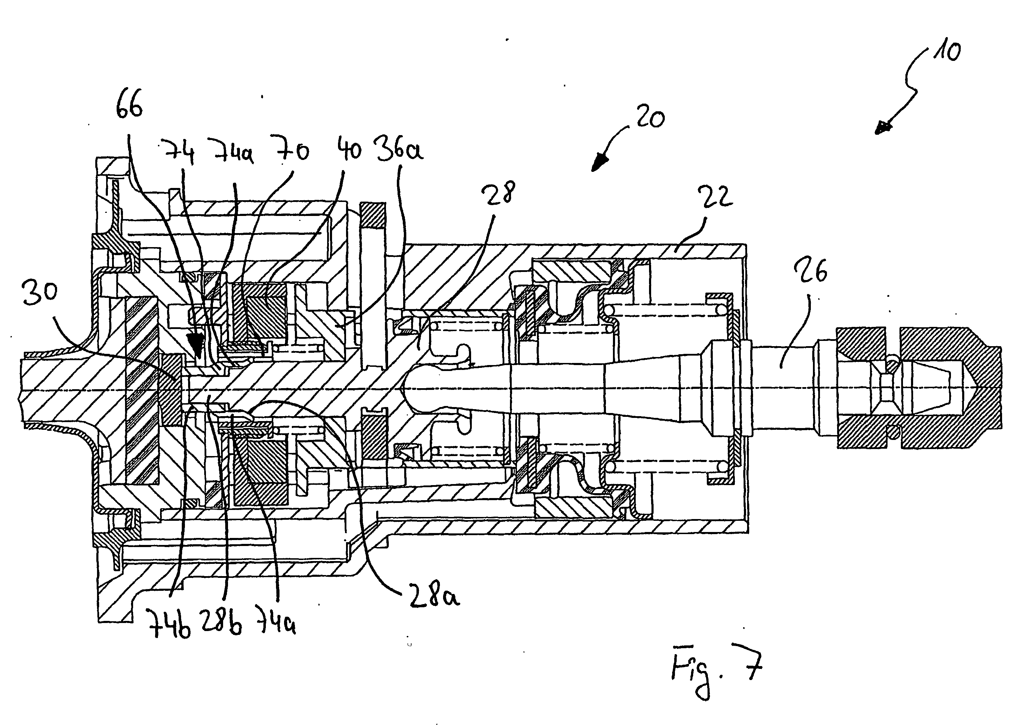

In Fig. 7 ist ein zweites Ausführungsbeispiel eines erfindungsgemäßen Unterdruckbremskraftverstärkers 10, genauer gesagt das Steuerventil 20 dieses Unterdruckbremskraftverstärkers 10, dargestellt. Der Unterdruckbremskraftverstärker 10 gemäß dem zweiten Ausführungsbeispiel stimmt funktionell im wesentlichen mit dem unter Bezugnahme auf die Figuren 1 bis 6 beschriebenen Unterdruckbremskraftverstärker überein. Bei dem Unterdruckbremskraftverstärker gemäß dem zweiten Ausführungsbeispiel wurde jedoch das konische Bauteil 76 gemäß Fig. 1 eingespart. Ein Vorteil dieser Einsparung ist die wesentlich geringere axiale Erstreckung der Koppeleinrichtung 66. Die geringere axiale Erstreckung hat zur Folge, daß kein größerer Bauraum innerhalb des Steuerventilgehäuses 20 notwendig wird, als dies bei einem Steuerventilgehäuse herkömmlicher Art, d.h. ohne Notbremshilfe, der Fall ist. Außerdem läßt sich die in Fig. 7 dargestellte Koppeleinrichtung 66 aufgrund des eingesparten konischen Bauteils kostengünstiger fertigen.

Bei dem in Fig. 7 dargestellten Unterdruckbremskraftverstärker 10 wird die Funktion des konischen Bauteils von dem Betätigungskolben 28 übernommen. Zu diesem Zweck besitzt der Betätigungskolben 28 an seinem der Fühlscheibe 30 zugewandten Ende Schrägflächen in Gestalt eines konischen Abschnitts 28a. Mittels dieser Schrägflächen 28a wirkt der Betätigungskolben 28 mit den Klemmfingern 74a des Klemmelements 74 zusammen.

Das Klemmelement 74 besitzt ein hohlzylindrisches Trägerteil 74b, welches eine Durchmesserverringerung 28b des Betätigungskolbens 28 radial außen umgibt und in Längsrichtung verschiebbar auf der Durchmesserverringerung 28b geführt ist. In der in Fig. 7 dargestellten Betriebsstellung des Unterdruckbremskraftverstärkers 10 liegt das hohlzylindrische Trägerteil 74b mit seinem einen Ende an der dem Eingangsglied 26 zugewandten Oberfläche der Fühlscheibe 30 an. Im Bereich seines anderen Endes sind die Klemmfinger 74a angeordnet.

Bei einer langsamen Verschiebung des Betätigungskolbens 28 in Betätigungsrichtung werden aufgrund der hohen, von der Fühlscheibe 30 in das Trägerteil 74b eingeleiteten Rückwirkkräfte die Klemmfinger 74a von dem konischen Abschnitt 28a des Betätigungskolbens 28 radial nach außen gedrängt. Dabei gehen die Klemmfinger 74a mit dem die Klemmfinger 74a radial außen umgebenden Koppelzylinder 70 eine Klemmverbindung ein. Aufgrund dieser Klemmverbindung ist der Betätigungskolben 28 in Betätigungsrichtung über seinen konischen Abschnitt 28a, die Klemmfinger 74a und den Koppelzylinder 70 mit dem Permanentmagneten 40 gekoppelt. Infolge dieser Kopplung des Betätigungskolbens 28 mit dem Permanentmagneten 40 kann sich der axiale Abstand zwischen dem Anker 36a und dem Permanentmagneten 40 nicht weiter verringern.

## Patentansprüche

1. Bremskraftverstärker (10), mit
- einer Unterdruckkammer (16) und einer davon durch eine bewegliche Wand (14) getrennten Arbeitskammer (18),
- einem Steuerventil (20), das ein mit der beweglichen Wand (14) kraftübertragend gekoppeltes Steuerventilgehäuse (22) aufweist und das zur Erzielung einer Druckdifferenz an der beweglichen Wand (14) die Zufuhr von Atmosphärendruck oder Überdruck zur Arbeitskammer (18) zu steuern vermag,
- einer Notbremshilfe mit einem Permanentmagneten (38), der in dem Steuerventilgehäuse (22) angeordnet ist, und einem mit dem Permanentmagneten (38) zusammenwirkenden Anker (36A), der bei einer Notbremsung in Anlage mit dem Permanentmagneten (38) gezogen wird, wodurch das Steuerventil (20) für die Zufuhr von Atmosphärendruck oder Überdruck zur Arbeitskammer (18) geöffnet gehalten wird, wobei der Permanentmagnet (38) und der Anker (36A) eine zweikomponentige Magnetbaugruppe (36A, 38) bilden, von der eine erste Komponente mit einem Betätigungskolben (28) in Betätigungsrichtung des Bremskraftverstärkers starr gekoppelt ist, und
- einer Koppeleinrichtung (66) zur Kopplung der zweiten Komponente der Magnetbaugruppe (36A, 38) zumindest in Betätigungsrichtung des Bremskraftverstärkers mit dem Betätigungskolben (28),
**dadurch gekennzeichnet, daß** entgegen der Betätigungsrichtung des Bremskraftverstärkers wirkende Rückwirkkräfte in die Koppeleinrichtung (66) einleitbar sind und zur Kopplung der zweiten Komponente der Magnetbaugruppe (36A, 38) zumindest in Betätigungsrichtung des Bremskraftverstärkers mit dem Betätigungskolben (28) führen können.

2. Bremskraftverstärker nach Anspruch 1,
**dadurch gekennzeichnet, daß** die zweite Komponente der Magnetbaugruppe (36A, 38) mittels einer Klemmverbindung mit dem Betätigungskolben (28) koppelbar ist.

3. Bremskraftverstärker nach Anspruch 1 oder 2,
**dadurch gekennzeichnet, daß** die Koppeleinrichtung (66) ein Klemmelement (74) umfaßt, das bezüglich einer Längsachse (A) des Steuerventilgehäuses (22) radial nach außen verformbar ist.

4. Bremskraftverstärker nach Anspruch 3,
**dadurch gekennzeichnet, daß** das Klemmelement (74) mehrere Finger (74A) aufweist, die sich parallel zur Längsachse A erstrecken und deren Gesamtheit die Längsachse (A) konzentrisch umgibt.

5. Bremskraftverstärker nach Anspruch 4,
**dadurch gekennzeichnet, daß** das der Unterdruckkammer (16) zugewandte Ende jedes Fingers (74A) mit einem gemeinsamen Trägerteil (74B) verbunden ist, das dem Betätigungskolben (28) in Betätigungsrichtung des Bremskraftverstärkers funktionell nachgeschaltet ist.

6. Bremskraftverstärker nach einem der Ansprüche 3 bis 5,
**dadurch gekennzeichnet, daß** der Betätigungskolben (28) radial außen Schrägflächen (28a) aufweist und mittels dieser Schrägflächen (28a) mit dem Klemmelement (74) zusammenwirkt.

7. Bremskraftverstärker nach einem der Ansprüche 3 bis 5,
**dadurch gekennzeichnet, daß** die Koppeleinrichtung (66) ein mit Schrägflächen (76A) versehenes Bauteil (76) aufweist, das zumindest über diese Schrägflächen (76A) mit dem Klemmelement (74) zusammenwirkt.

8. Bremskraftverstärker nach Anspruch 7,
**dadurch gekennzeichnet, daß** zwischen dem Klemmelement (74) und dem mit Schrägflächen (76A) versehenen Bauteil (76) ein erstes elastisches Element (78) angeordnet ist.

9. Bremskraftverstärker nach einem der Ansprüche 7 oder 8,
**dadurch gekennzeichnet, daß** das Steuerventilgehäuse (22) einen Anschlag (44B) aufweist, welcher bei einer Verschiebung des mit Schrägflächen (76A) versehenen Bauteiles (76) entgegen der Betätigungsrichtung mit diesem zusammenwirkt.

10. Bremskraftverstärker nach einem der Ansprüche 3 bis 9,
**dadurch gekennzeichnet, daß** die Koppeleinrichtung (66) einen mit der zweiten Komponente der Magnetbaugruppe (36A, 38) zumindest in Betätigungsrichtung zusammenwirkenden Fortsatz (70) mit einem Abschnitt (70B) aufweist, der das Klemmelement (74) radial außen zumindest bereichsweise umgibt und der mit dem Klemmelement (74) zusammenwirkt.

11. Bremskraftverstärker nach Anspruch 10,
**dadurch gekennzeichnet, daß** der Fortsatz (70) bezüglich der zweiten Komponente der Magnetbaugruppe (36A, 38) in Betätigungsrichtung vorgespannt ist.

12. Bremskraftverstärker nach einem der Ansprüche 1 bis 11,
**dadurch gekennzeichnet, daß** die zweite Komponente der Magnetbaugruppe (36A, 38) axial verstellbar mit einer Halterung (42) verbunden ist.

13. Bremskraftverstärker nach Anspruch 12,
**dadurch gekennzeichnet, daß** ein zweites elastisches Element (43) vorhanden ist, welches die Halterung (42) entgegen der Betätigungsrichtung in Richtung auf das Steuerventilgehäuse (22) vorspannt.

14. Bremskraftverstärker nach Anspruch 12 oder 13,
**dadurch gekennzeichnet, daß** die Verbindung von Halterung (42) und Fortsatz (70) eine Relativverschiebung in Axialrichtung zuläßt.

15. Bremskraftverstärker nach Anspruch 14,
**dadurch gekennzeichnet, daß** die Halterung (42) entgegen der Betätigungsrichtung starr und in Betätigungsrichtung federnd mit dem Fortsatz (70) verbunden ist.

16. Bremskraftverstärker nach einem der Ansprüche 13 bis 15,
**dadurch gekennzeichnet, daß** die Halterung (42) eine radial innen offene Nut (42B) aufweist, in die ein Kragen (70A) des Fortsatzes (70) ragt.

17. Bremskraftverstärker nach Anspruch 16,
**dadurch gekennzeichnet, daß** in der Nut (42B) ein drittes elastisches Element (72) zwischen einer der Unterdruckkammer (16) zugewandten Seitenfläche der Nut (42B) und einer gegenüberliegenden Stirnseite des Kragens (70A) des Fortsatzes (70) angeordnet ist.

## Claims

1. A brake booster (10), comprising
- a vacuum chamber (16) and a working chamber (18) separated from each other by a movable wall (14),
- a control valve (20), which comprises a control valve housing (22) coupled workingly to the movable wall (14) and which is capable of controlling the supply of atmospheric pressure or above-atmospheric pressure to the working chamber (18) to achieve a pressure difference at the movable wall (14),
- an emergency braking aid comprising a permanent magnet (38) disposed in the control valve housing (22), and an armature (36A), which cooperates with the permanent magnet (38) and in the event of emergency braking is drawn into abutment with the permanent magnet (38), with the result that the control valve (20) is held open for the supply of atmospheric pressure or above-atmospheric pressure to the working chamber (18), wherein the permanent magnet (38) and the armature (36A) form a two-component magnetic module (36A, 38), of which a first component is rigidly coupled to an actuating piston (28) in actuating direction of the brake booster, and
- a coupling device (66) for coupling the second component of the magnetic module (36A, 38), at least in the actuating direction of the brake booster, to the actuating piston (28),
**characterised in that** reaction forces acting counter to the actuating direction of the brake booster may be introduced into the coupling device (66) and can cause coupling of the second component of the magnetic module (36A, 38), at least in actuating direction of the brake booster, to the actuating piston (28).

2. The brake booster according to claim 1,
**characterised in that** the second component of the magnetic module (36A, 38) may be coupled to the actuating piston (28) by means of a clamping joint.

3. The brake booster according to claim 1 or 2,
**characterised in that** the coupling device (66) comprises a clamping element (74), which is deformable radially outwards relative to a longitudinal axis (A) of the control valve housing (22).

4. The brake booster according to claim 3,
**characterised in that** the clamping element (74) comprises several fingers (74A), which extend parallel to the longitudinal axis A and all of which concentrically surround the longitudinal axis (A).

5. The brake booster according to claim 4,
**characterised in that** the end of each finger (74A) facing the vacuum chamber (16) is connected to a common carrier part (74B) which, in actuating direction of the brake booster, is disposed functionally downstream of the actuating piston (28).

6. The brake booster according to one of claims 3 to 5,
**characterised in that** the actuating piston (28) is provided with sloping surfaces (28a) radially at the outside and cooperates with the clamping element (74) via said sloping surfaces (28a).

7. The brake booster according to one of claims 3 to 5,
**characterised in that** the coupling device (66) comprises a component (76), which is provided with sloping surfaces (76A) and which cooperates with the clamping element (74) at least via said sloping surfaces (76A).

8. The brake booster according to claim 7,
**characterised in that** a first resilient element (78) is disposed between the clamping element (74) and the component (76) provided with sloping surfaces (76A).

9. The brake booster according to one of claims 7 or 8,
**characterised in that** the control valve housing (22) has a stop (44B), which cooperates with the component (76) provided with sloping surfaces (76A) upon displacement of the latter counter to actuating direction.

10. The brake booster according to one of claims 3 to 9,
**characterised in that** the coupling device (66) comprises an extension (70), which at least in actuating direction cooperates with the second component of the magnetic module (36A, 38) and has a portion (70B) radially surrounding the outside of the clamping element (74) at least in sections and cooperating with the clamping element (74).

11. The brake booster according to claim 10,
**characterised in that** the extension (70) is preloaded in actuating direction relative to the second component of the magnetic module (36A, 38).

12. The brake booster according to one of claims 1 to 11,
**characterised in that** the second component of the magnetic module (36A, 38) is connected in an axially adjustable manner to a holding device (42).

13. The brake booster according to claim 12,
**characterised in that** a second resilient element (43) is provided, which preloads the holding device (42) counter to the actuating direction towards the control valve housing (22).

14. The brake booster according to claim. 12 or 13,
**characterised in that** the connection of holding device (42) and extension (70) allows a relative displacement in axial direction.

15. The brake booster according to claim 14,
**characterised in that** the holding device (42) is connected to the extension (70) rigidly counter to the actuating direction and resiliently in the actuating direction.

16. The brake booster according to one of claims 13 to 15,
**characterised in that** the holding device (42) has a groove (42B) open in a radially inward direction into which a collar (70A) of the extension (70) projects.

17. The brake booster according to claim 16,
**characterised in that** in the groove (42B) a third resilient element (72) is disposed between a side surface of the groove (42B) facing the vacuum chamber (16) and an opposite end face of the collar (70A) of the extension (70).

## Revendications

1. Servofrein (10) comportant
- une chambre de dépression (16) et une chambre de travail (18) séparée de celle-ci par une paroi mobile (14),
- une valve de commande (20) qui présente un boîtier (22) de valve de commande couplé en transmission de force à la paroi mobile (14) et qui permet de commander l'amenée de pression atmosphérique ou de surpression à la chambre de travail (18) afin d'obtenir une différence de pression sur la paroi mobile (14),
- une assistance de frein de secours comportant un aimant permanent (38) placé dans le boîtier de la valve de commande (22) et un induit (36A) qui coopère avec l'aimant permanent (38) et qui est utilisé en combinaison avec l'aimant permanent (38) en cas de freinage d'urgence, ce qui permet à la valve de commande (20) de rester ouverte pour l'arrivée de la pression atmosphérique ou de la surpression vers la chambre de travail (18), l'aimant permanent (38) et l'induit (36A, 38) formant un sous-groupe d'aimants à deux composants dont le premier composant est couplé de façon rigide à un piston d'actionnement (28) dans le sens d'actionnement du servofrein et
- un dispositif de couplage (66) pour coupler le deuxième composant du sous-groupe d'aimants (36A, 38) au piston d'actionnement (28) au moins dans le sens d'actionnement du servofrein,
**caractérisé en ce que** les forces rétroactives agissant à l'encontre du sens d'actionnement du servofrein peuvent être introduites dans le dispositif de couplage (66) et être guidées avec le piston d'actionnement (28) pour le couplage du deuxième composant du sous-groupe d'aimants (36A, 38) au moins dans le sens d'actionnement du servofrein.

2. Servofrein selon la revendication 1, **caractérisé en ce que** le deuxième composant du sous-groupe d'aimants (36A, 38) peut être couplé au piston d'actionnement (28) à l'aide d'une jonction par serrage.

3. Servofrein selon la revendication 1 ou 2, **caractérisé en ce que** le dispositif de couplage (66) comprend un élément de serrage (74) qui peut être déformé vers l'extérieur dans la direction radiale par rapport à un axe longitudinal (A) du boîtier de la valve de commande (22).

4. Servofrein selon la revendication 3, **caractérisé en ce que** l'élément de serrage (74) présente plusieurs doigts (74A) qui s'étendent parallèlement à l'axe longitudinal A et dont l'ensemble entoure de manière concentrique l'axe longitudinal (A).

5. Servofrein selon la revendication 4, **caractérisé en ce que** l'extrémité de chaque doigt (74A) tournée vers la chambre de dépression (16) est reliée à une pièce porteuse (74B) commune qui est placée de manière fonctionnelle en aval du piston d'actionnement (28) dans le sens d'actionnement du servofrein.

6. Servofrein selon l'une quelconque des revendications 3 à 5, **caractérisé en ce que** le piston d'actionnement (28) présente des surfaces inclinées radialement vers l'extérieur (28a) et qu'il agit avec l'élément de serrage (74) à l'aide de ces surfaces inclinées (28a).

7. Servofrein selon l'une quelconque des revendications 3 à 5, **caractérisé en ce que** le dispositif de couplage (66) présente une pièce (76) pourvue de surfaces inclinées (76A), laquelle pièce coopère avec l'élément de serrage au moins via ces surfaces inclinées (76A).

8. Servofrein selon la revendication 7, **caractérisé en ce qu'**un premier élément élastique (78) est placé entre l'élément de serrage (74) et la pièce (76) pourvue de surfaces inclinées (76A).

9. Servofrein selon l'une quelconque des revendications 7 ou 8, **caractérisé en ce que** le boîtier de la valve de commande (22) présente une butée (44B) qui coopère avec la pièce (76) pourvue de surfaces inclinées (76A) lorsque cette dernière est déplacée dans le sens opposé au sens d'actionnement.

10. Servofrein selon l'une quelconque des revendications 3 à 9, **caractérisé en ce que** le dispositif de couplage (66) présente un prolongement (70) coopérant avec le deuxième composant du sous-groupe d'aimants (36A, 38) au moins dans le sens d'actionnement par une partie (70B) qui entoure, au moins par zone, l'élément de serrage (74) radialement vers l'extérieur et qui coopère avec l'élément de serrage (74).

11. Servofrein selon la revendication 10, **caractérisé en ce que** le prolongement (70) est précontraint dans le sens d'actionnement par rapport au deuxième composant du sous-groupe d'aimants (36A, 38).

12. Servofrein selon l'une quelconque des revendications 1 à 11, **caractérisé en ce que** le deuxième composant du sous-groupe d'aimants (36A, 38) est relié à une fixation (42) avec réglage axial possible.

13. Servofrein selon la revendication 12, **caractérisé en ce qu'**il existe un deuxième élément élastique (43) qui précontraint la fixation (42) dans le sens opposé au sens d'actionnement, en direction du boîtier de la valve de commande (22).

14. Servofrein selon la revendication 12 ou 13, **caractérisé en ce que** la liaison entre la fixation (42) et le prolongement (70) permet un déplacement relatif dans la direction axiale.

15. Servofrein selon la revendication 14, **caractérisé en ce que** la fixation (42) est reliée au prolongement (70) de manière rigide dans le sens opposé au sens d'actionnement et de manière élastique dans le sens d'actionnement.

16. Servofrein selon l'une quelconque des revendications 13 à 15, **caractérisé en ce que** la fixation (42) présente une rainure (42B) ouverte radialement vers l'intérieur et dans laquelle fait saillie une collerette (70A) du prolongement.

17. Servofrein selon la revendication 16, **caractérisé en ce qu'**un troisième élément élastique (72) est disposé dans la rainure (42B) entre une face latérale de la rainure (42B) tournée vers la chambre de dépression (16) et une face frontale opposée de la collerette (70A) du prolongement (70).
